# EUROPEAN PATENT APPLICATION

(11) **EP 2 369 503 A1**
(43) Date of publication of application: **28.09.2011**
(21) Application number: 10250288.7
(22) Date of filing: 18.02.2010
(51) Int. Cl.: G06F 17/30

(54) **Data storage management**

(71) Applicant: Silverstring Limited, Bloxham Banbury Oxfordshire OX15 4FF (GB)
(72) Inventor: Bates, Richard, Warwickshire , CV 47 8NS (GB); MacKenzie, Alistair, Hook, Hampshire RG27 9SB (GB)
(74) Representative: Downing, Michael Philip

(57) **Abstract**

Apparatus is disclosed for managing the use of storage devices on a network of computing devices, the network comprising a plurality of computing devices each running different operating systems, at least one data storage device, and a management system for controlling archival of data from the computing devices to the data storage device, the management system including a database of data previously archived; the apparatus comprising an agent running on a first computing device attached to the network, the first computing device running a first operating system, the agent being adapted to issue an instruction to a second computing device being one of the plurality of computing devices via a remote administration protocol, the second computing device running a second operating system that differs from the first operating system, and the instruction comprising a query to the database concerning data archived from computing devices running the second operating system. The remote administration protocol is preferably Secure Shell (SSH), but other protocols can be employed. A corresponding method and software agent are also disclosed. In addition, a data storage resource management system is disclosed, comprising a query agent and an analysis agent, the query agent being adapted to issue at least one query to a database of backed up or archived objects in order to elicit information relating to the objects; the analysis agent being adapted to organise the query results and display totals of objects meeting defined criteria.

## Description

### FIELD OF THE INVENTION

The present invention relates to the management of data storage.

### BACKGROUND ART

There now exist a number of data storage management suites, principally the Tivoli Storage Manager (TSM) suite by IBM. These aim to track and manage the retention of data from substantial organisations, to assist with the retrieval of previously archived data, and to allow for backup and disaster recovery.

Whilst suites such as TSM are extremely powerful, their use in an organisation of any significant size quickly becomes very complex and requires active management. Third party software was therefore developed to automate previously manual processes for the TSM environment, such as monitoring, alerting, incident management, reporting and licence reconciliation, and even automated full system recovery in order to provide accurate recovery statistics.

An area that has not been provided for, however, is reducing the infrastructure cost and/or extending the useful life of existing TSM and associated storage infrastructure (or that of similar storage systems).

### SUMMARY OF THE INVENTION

The present invention seeks to provide a means allowing analysis of the quantity and type of data stored on a data server management server such as a TSM server, and reporting based on the results. This allows users of such servers to make decisions as to whether they
- Need to stop backing up certain data types
- Need to reduce the versions on certain data types
- Need to increase the versions on certain data types
- Can delete redundant backup and archive data from TSM
- Will benefit from deduplication technologies

Organisations that are the principal users of such storage management systems are routinely under pressure not to spend money unnecessarily. Data storage management is an area of IT provision that consumes increasing storage capacity (disk and tape) year on year. It is not uncommon for users to grow their storage usage by 100% a year. It is very rare indeed to see negative growth. Through the present invention, we aim to allow users to identify what data is stored and how much space it is taking up. They can then identify and remove redundant backups, hence saving storage space and postponing the purchase of additional storage hardware.

In its first aspect, the present invention therefore provides apparatus for managing the use of storage devices on a network of computing devices, the network comprising a plurality of computing devices each running different operating systems, at least one data storage device, and a management system for controlling archival of data from the computing devices to the data storage device, the management system including a database of data previously archived; the apparatus comprising an agent running on a first computing device attached to the network, the first computing device running a first operating system, the agent being adapted to issue an instruction to a second computing device being one of the plurality of computing devices via a remote administration protocol, the second computing device running a second operating system that differs from the first operating system, and the instruction comprising a query to the database concerning data archived from computing devices running the second operating system.

In this way, query methods can be used for the TSM (or other) database that are optimal in terms of speed and TSM server performance, but which avoid limitations on the type of query that can be submitted. The information necessary in order to make an informed analysis can therefore be gathered efficiently.

The request may concern data archived from a computing device other than the second computing device that nevertheless runs the second operating system. Thus, the system need only consult one further computing device for each of the operating systems in use on the network, in order to gather data concerning all the archived data. The agent is nevertheless preferably adapted to issue multiple such requests to multiple computing devices on the network, thereby allowing for all operating systems in use.

Each request will generally be to a computing device running a different operating system, as the agent can issue a query directly to the database concerning data archived from computing devices running the first operating system.

The computing devices are (typically) servers. The first computing device can be one of the plurality of computing devices, or is can be a distinct server dedicated to this purpose.

The remote administration protocol is preferably Secure Shell (SSH), but other protocols can be employed.

The archived data will often be backups of the various computing devices attached to the network. Thus, in defining the invention (above), we intend the term "archived data" to encompass all data stored under the control of the management system, which will generally include both backups of computing devices, backups of storage devices, historic copies of data, and the like.

The first operating system is preferably Microsoft® Windows™. The management system of principal interest to the applicants is Tivoli Storage Manager™, but the principle of the invention can be applied to other management systems.

In a second aspect, the present invention relates to a method of gathering information as to the usage of storage devices on a network of computing devices, the network comprising a plurality of computing devices each running different operating systems, at least one data storage device, and a management system for controlling archival of data from the computing devices to the data storage device, the management system including a database of data previously archived; the method comprising the steps of; providing an agent on a first computing device running a first operating system and attached to the network, via the agent, issuing an instruction to a second computing device being one of the plurality of computing devices via a remote administration protocol, the second computing device being one running a second operating system that differs from the first operating system, and the instruction comprising a query to the database concerning data archived from computing devices running the second operating system.

Preferred features of this second aspect are as set out above in relation to the first aspect of the invention.

In a third aspect, the invention provides a software agent for assisting in the management of storage devices on a network of computing devices, the network comprising a plurality of computing devices each running different operating systems, at least one data storage device, and a management system for controlling archival of data from the computing devices to the data storage device, the management system including a database of data previously archived; the software agent being adapted; to run on a first computing device having a first operating system and being attached to the network, to issue an instruction to a second computing device being one of the plurality of computing devices via a remote administration protocol, the second computing device running a second operating system that differs from the first operating system, the instruction comprising a query to the database concerning data archived from computing devices running the second operating system.

Preferred features of this third aspect are as set out above in relation to the first aspect of the invention.

In a fourth aspect, the present invention provides a data storage resource management system comprising a query agent and an analysis agent, the query agent being adapted to issue at least one query to a database of backed up or archived objects in order to elicit information relating to the objects; the analysis agent being adapted to organise the query results and display totals of objects meeting defined criteria

The query agent of fourth aspect is preferably adapted to run on a first computing device running a first operating system, and to issue an instruction to a second computing device via a remote administration protocol, the second computing device running a second operating system that differs from the first operating system, and the instruction comprising a query to the database concerning data archived from computing devices running the second operating system.

In the context of a TSM-based system, we use the TSM Database as the source of this information. Using the TSM database means there is no need to install agents or complex monitoring tools on end servers in order to get a view of the data both within TSM and on the production systems.

The amount of data produced could be vast. From the TSM database we can obtain information on every file or object that is stored in TSM server storage. For a single customer this could be information on 10's or 100's of millions of files - hence 10's or 100's of millions of rows of data. If this is scaled to many customers then there is potentially a database containing hundreds of millions of rows.

It should be noted that, in this application, the words "file" and "object" are used interchangeably. When we discuss "files", this is a specific term relating to files backed up by the TSM backup-archive client from one of a variety of operating systems (Windows™, Unix and the like). However data can also be backed up to TSM via "TDP" clients; these are online database and application backups (from SQL or Exchange systems etc). In order to use consistent terminology across the many different backup and archive types we generally use the word "objects" to mean both file and database backups and also archived data.

Likewise, much of the discussion in this application is in relation to the TSM system. However, the invention is applicable to other storage management systems that have the necessary structural features.

One aspect of TSM is that information on each and every backed up file or application is stored in a relational database. Hence the TSM database starts small and grows and grows as an organisation backs up more and more data. Information stored includes server (node) information, filesystem information, object information, object creation date, object modification date, object backup date, object archive date, object expiration date and the location of the object on the storage managed by TSM (which could be disk or tape).

The TSM (or similar) database is a mission critical entity and must be protected itself with backups etc - in order that data can be restored. The tape media used as the ultimate backup destination cannot be read without the TSM database.

TSM has a complex and dynamic policy engine which means that the number of versions of each backed up and archived object can be fine tuned. Whilst some effort is put into this policy configuration during initial installation of TSM we have found that over time the policies no longer reflect business requirements and data begins to be stored against inappropriate policies. This means that data is either retained for too long or too short in TSM. If data is retained for too long in TSM then not only does the database have another row for that version of the object, but also the actual object is stored in storage managed by TSM. The net result is that storage requirements (normally tape media, but increasingly disk) continually grows - and incurs cost for the business. Users must then choose between purchasing additional storage (which incurs all the other management and cost overheads associated with it - power, cooling, data centre space etc),or not purchasing additional storage and hence compromising their data protection regime, which could ultimately result in data loss in the event of a disaster.

Generally, therefore, users treat the TSM server and associated tape storage as a "black hole" which just gets bigger and bigger year on year. Users rarely know what it is stored in TSM. With often many 10s or 100's of millions of objects, it is impossible to get a holistic view of what is consuming TSM storage space. The problem is compounded for larger organisations where they may have many TSM servers. The applicant is aware of a user (a medium sized financial organization) which has nearly a billion backed up objects stored in TSM consuming some half a million GigaBytes of space.

The present invention aims to allow users to fully understand the contents of their TSM storage for the first time. It uses an agentless approach to gather information on all backup and archive objects from the TSM database. It then stores this information in a database in order that it may be used to produce useful and meaningful displays for a user, such as drill down reports and charts.

The information within the TSM database has hitherto been an "untapped" resource, which the present invention makes available to users.

### BRIEF DESCRIPTION OF THE DRAWINGS

An embodiment of the present invention will now be described by way of example, with reference to the accompanying figures in which;
Figure 1 shows a collection of servers on which the present invention is operating;
Figure 2 shows the typical network components involved;

### DETAILED DESCRIPTION OF THE EMBODIMENTS

### 1. TYPES OF OBJECT STORED IN TSM

There are two fundamental different types of object stored in TSM: "Backup" and "Archive", distinguished by a value placed in the "occupancy" table in TSM - the "type" column being either "Bkup" or "Arch".

Archive data is the least common. It is generally used for long term retention of data or HSM (Hierarchical Storage Management). There is no concept of "versions". It is all time based. The command used to archive files via the Backup-Archive Client is "dsmc archive". However some of the special TSM agents (e.g. TDP for SAP, or the TSM HSM Client for Windows) store data as archive objects via the API.

Backup is the most common type. Backup is all about retaining certain numbers of versions of objects in TSM. The commands used to backup files are generally "dsmc inc" and "dsmc selective". Also some of the TSM agents (e.g. TDP for SQL, Exchange, Domino, etc) store application and database backups as backup objects via the API.

We can get information on all objects backed up via the Backup-Archive client and currently stored in TSM via the "q backup" command. This is a client side (TSM backup-archive client) command - and is optimised at the server end for returning fast results. We could achieve similar results by selecting rows from the BACKUPS table but this is notoriously slow and impacts TSM server performance.

We can get information on all objects archived by the Backup-Archive Client and currently stored in TSM via the "q archive" command. This is a client side (TSM backup-archive client) command - and is optimised at the server end for returning fast results. We could achieve similar results by selecting rows from the ARCHIVES table but this is notoriously slow and impacts TSM server performance.

### 1.1. APPLICATION/DB BACKUPS

TSM backs up online applications and databases (eg. Oracle, Informix, SQL, Exchange, SAP, Sharepoint etc) via special TSM agents called TDPs (Tivoli Data Protection clients). These use the TSM API installed as part of the backup-archive client to send their data to their TSM server where it is stored as BACKUP or ARCHIVE objects as described above.

We could get the information on TDP backups by using the corresponding TDP command line (e.g it is "tdpsqlc" for the TDP for SQL client). But this means we would have to install every command line for every type of TDP agent on the machine where client software for theinvention is installed - and there are lots of them. Also this is not possible because some of the data may have been backed up via a UNIX server, and we would prefer to run the client on a Windows™ server.

Also the output for each TDP CLI is different so we would have multiple functions all parsing different output structures.

Ideally to get the information on TDP backups we would use the TSM API. However, the TSM API is not capable of querying objects stored by any of the TSM clients. So objects backed up or archived by the regular backup-archive client are not visible via the API. Likewise any objects which have been stored in TSM by any of the TDP applications are not visible either. According to IBM this is a "security feature". Documentation for the TSM v5.5 API is available at: http://publib.boulder.ibm.com/infocenter/tivihelp/vlrl/topic/com.ibm.itsmfdt.do c/b_api.htm

So we have had to find an alternative solution to query objects using the TSM backup-archive client commands: dsmc "q backup" and "q archive".

### 1.2. USING DSMC TO QUERY OBJECTS

It is therefore not straightforward to develop a desktop client for the present invention. Rather than using one simple set of API calls, we now need to have a mix of functionality to query objects from the TSM server.

This is broken down into 2 main challenges:
- Data Type: Data backed up via the TSM Backup-Archive client vs. Data backed up via the TDP applications (which use the TSM API)
- Operating System: Data backed up from a windows client vs. Data backed up from non-windows clients (Linux, AIX, HP-UX, Solaris etc)

We have identified a way to query API data using the "dsmc" command, which is explained later. However a Windows dsmc client cannot query objects backed up from a different operating system. So we have had to find an alternative method to connect to a Linux/Aix machine on the customers network and run the dsmc command on there. The output is returned and captured in the normal way by the client software.

All TSM users have a mix of data types (API, NON-API) whereas not all users have a mix of Operating Systems. Windows is the predominant Operating system, so the "data type" for Windows servers is the most important for the present application to cater for.

So in a heterogeneous environment (mixed Operating Systems) we should only need a maximum of 3 servers to be able to query all dsmc objects from the TSM server;
- A single windows server (the machine where the client software is installed) can use the -asnode switch on the dsmc command (along with appropriate grant proxy authority) to query all windows objects - even windows API objects
- A single Unix/Linux server (contacted via SSH) can use the - asnode switch on the dsmc command (along with appropriate grant proxy authority) to query all Linux/Unix objects - even Linux/Unix API objects
- A single Netware server (contacted via SSH) can use the -asnode switch on the dsmc command (along with appropriate grant proxy authority) to query all Netware objects

### 1.2.1. QUERY DIFFERENT DATA TYPES

This section is meant as an introduction to the data collection method. Worked examples will be provided later.

Also note for simplicity the examples here do not use the proxynode authentication or all the required dsmc switches. In the client software this will have to be used so that one TSM node can query data for all other nodes.

Consider the following filesystems recorded in a hypothetical TSM database (via query filespace) command.

| NODENAME | FILESPACE NAME | PLATFORM | FILESYSTEM TYPE |
|---|---|---|---|
| PREDSQL01 | \\predsql0l\c$ | WinNT | NTFS |
| PREDSQL01 | \\predsqlol\m$ | WinNT | NTFS |
| PREDSQL01_SQL | PREDSQL01\meta\0000 | WinNT | API :SqlData |
| PREDSQL01_SQL | PREDSQL01\data\0001 | WinNT | API:SqlData |

Thus, there are (in this case) 2 NTFS filespaces (backed up via the backup-archive client) and 2 API:SQLData filespaces (backed up via the TDP for SQL client).

To query ALL the active and inactive objects for one of the NTFS filespaces we can use the following command
dsmc q backup \\predsq101\c$\ -subdir=yes -inactive -filesonly
Typical output is as follows:
IBM Tivoli Storage Manager
Command Line Backup/Archive Client Interface
Client Version 5, Release 5, Level 2.2
Client date/time: 10/21/2009 11:54:38
(c) Copyright by IBM Corporation and other(s) 1990, 2009. All Rights Reserved.
Node Name: PREDSQL01
Session established with server SILVTSM01: Windows
Server Version 5, Release 5, Level 3.0
Server date/time: 10/21/2009 11:54:10 Last access: 10/21/2009 11:43:41

| File | Size | Backup Date | | Mgmt Class | | A/I |
|---|---|---|---|---|---|---|
| | | | | | | |
| | 0 | B 04/21/2009 23:11:50 | | DEFAULT | | A |
| \\predsql01\c$\AUTOEXEC.BAT | | | | | | |
| | 0 | B 04/21/2009 23:11:50 | | DEFAULT | | A |
| \\predsq101\c$\CONFIG.SYS | | | | | | |
| | 12,328 | B 09/11/2009 20:09:56 | | DEFAULT | | A |
| \\predsqlol\c$\GDIPFONTCACHEV1.DAT | | | | | | |
| | 178 | B 04/21/2009 23:11:50 | | DEFAULT | | A |
| \\predsq101\c$\Documents and Settings\Administrator\ntuser.ini | | | | | | |
| | 0 | B 04/21/2009 23:11:50 | | DEFAULT | | A |
| \\predsql01\c$\Documents and Settings\Administrator\Sti_Trace.log | | | | | | |
| | 62 | B 04/21/2009 23:11:50 | | DEFAULT | | A |
| \\predsql01\c$\Documents and Settings\Administrator\Application | | | | | | |
| Data\desktop.ini | | | | | | |
| | 574 | B 04/21/2009 23:11:50 | | DEFAULT | | A |
| \\predsql01\c$\Documents and Settings\Administrator\Application | | | | | | |
| Data\Microsoft\CryptnetUrlCache\Content\E04822AD18D472EA5B582E6E6F8C6B9A | | | | | | |
| | 140 | B 04/21/2009 23:11:50 | | DEFAULT | | A |
| \\predsq101\c$\Documents and Settings\Administrator\Application | | | | | | |
| Data\Microsoft\CryptnetUrlCache\MetaData\E04822AD18D472EA5B582E6E6F8C6B9A | | | | | | |
| | 2,128 | B 04/21/2009 23:11:50 | | DEFAULT | | A |
| \\predsq101\c$\Documents and Settings\Administrator\Application | | | | | | |
| Data\Microsoft\Internet Explorer\Desktop.htt | | | | | | |
| | 117 | B 04/21/2009 23:11:50 | | DEFAULT | | A |
| \\predsql01\c$\Documents and Settings\Administrator\Application | | | | | | |
| Data\Microsoft\Internet Explorer\Quick Launch\desktop.ini | | | | | | |

We can also query the objects for the API:SQLData filespace using a clever trick in the TSM client syntax. We insert {} around the filespace name:
dsmc q backup {PREDSQL01\data\0001}\' -subdir=yes -inactive -filesonly -nodename=PREDSQL01_SQL

### Typical output as follows

IBM Tivoli Storage Manager
Command Line Backup/Archive Client Interface
Client Version 5, Release 5, Level 2.2
Client date/time: 10/21/2009 13:10:30
(c) Copyright by IBM Corporation and other(s) 1990, 2009. All Rights Reserved.
Node Name: PREDSQL01_SQL
Session established with server SILVTSM01: Windows
Server Version 5, Release 5, Level 3.0
Server date/time: 10/21/2009 13:09:59 Last access: 10/21/2009 13:09:14

| A/I | File | Size | | Backup Date | | Mgmt Class |
|---|---|---|---|---|---|---|
| | | | | | | |
| | API | 1,730,208 | KB | 10/21/2009 01:40:02 | | SQL_BACKUP |
| A | PREDSQL01\data\0001\predatarv2\full | | | | | |
| | API | 59,611,137 | B | 10/21/2009 04:02:47 | | SQL_BACKUP |
| A | PREDSQL01\data\0001\PredatarV2\20091021040316\00001720\log | | | | | |
| | API | 980,474 | KB | 10/21/2009 05:11:48 | | SQL_BACKUP |
| A | PREDSQL01\data\0001\PredatarV2\20091021051218\00001698\log | | | | | |
| | API | 22,775,809 | B | 10/21/2009 06:17:52 | | SQL_BACKUP |
| A | PREDSQL01\data\0001\PredatarV2\20091021061822\00001180\log | | | | | |
| | API | 28,375,041 | B | 10/21/2009 07:01:07 | | SQL_BACKUP |
| A | PREDSQL01\data\0001\PredatarV2\20091021070138\00000EB4\log | | | | | |
| | API | 33,789,953 | B | 10/21/2009 08:02:23 | | SQL_BACKUP |
| A | PREDSQL01\data\0001\PredatarV2\20091021080253\00000B64\log | | | | | |
| | API | 50,157,569 | B | 10/21/2009 09:02:34 | | SQL_BACKUP |
| A | PREDSQL01\data\0001\PredatarV2\20091021090305\0000098C\log | | | | | |
| | API | 20,557,825 | B | 10/21/2009 10:02:46 | | SQL_BACKUP |
| A | PREDSQL01\data\0001\PredatarV2\20091021100316\00000990\log | | | | | |
| | API | 26,572,801 | B | 10/21/2009 11:01:02 | | SQL_BACKUP |
| A | PREDSQL01\data\0001\PredatarV2\20091021110132\00001238\log | | | | | |
| | API | 36,502,529 | B | 10/21/2009 12:00:24 | | SQL_BACKUP |
| A | PREDSQL01\data\0001\PredatarV2\20091021120054\000001E4\log | | | | | |
| | API | 48,867,329 | B | 10/21/2009 13:00:35 | | SQL_BACKUP |
| A | PREDSQL01\data\0001\PredatarV2\20091021130105\00001624\log | | | | | |
| | API | 25,715,785 | KB | 10/21/2009 01:00:10 | | SQL_BACKUP |
| A | PREDSQL01\data\0001\Predatar\full | | | | | |

If running the dsmc command on a windows machine (where the client of the present invention is installed) then you can only query objects backed up or archived from a windows platform. So the next section discusses how we can achieve the same results above for other Operating Systems - but all performed from the windows machine where the client is installed.

### 1.2.2. QUERYING DIFFERENT OPERATING SYSTEMS

This section is meant as an introduction to the data collection method for non windows servers.

As discussed above the "dsmc" commands are platform dependant. So a dsmc command on a windows server using the proxy node authentication cannot query filespace objects on linux, aix, hp-ux, solaris, netware platforms.

So what we need to do is use an industry standard such as SSH (somewhat preferable to the less secure telnet) to run commands remotely on a non-windows server. This non-windows server will then have proxynode rights to query objects for other non-windows nodes.

It has been discovered that Linux and AIX are interoperable - so that a Linux dsmc client can query AIX objects and vice versa. It is assumed that HPUX , Solaris are interoperable with Linux, AIX too as they are all "flavours" of UNIX. The only exception is netware. But (again) Netware servers can have SSH installed if necessary.

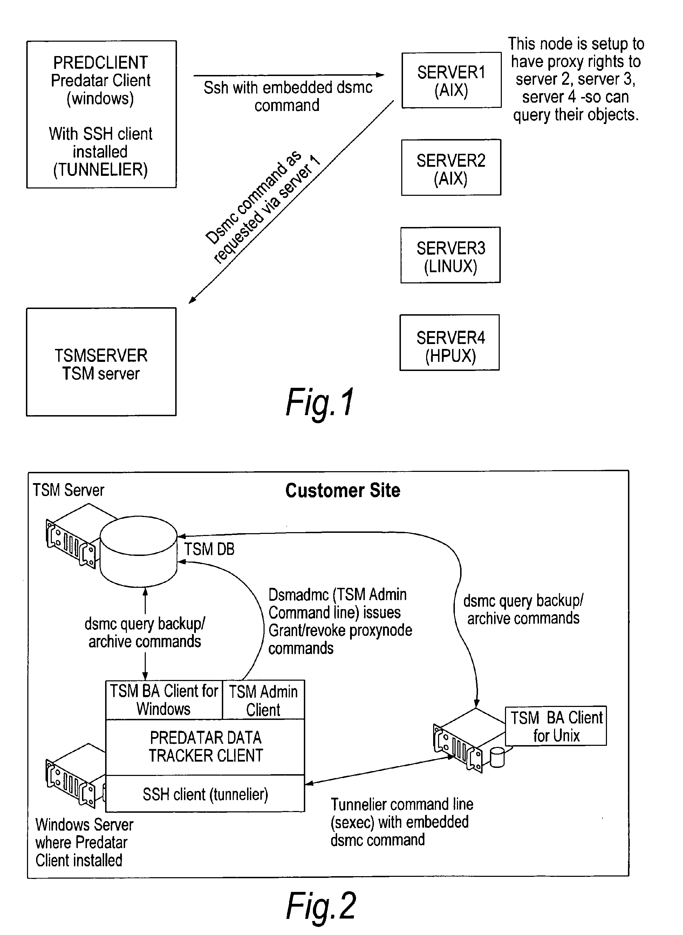

So imagine we have 6 servers in our very basic configuration, as shown in figure 1.
- PREDCLIENT - has the normal client software installed and also the desktop client installed. It also has an SSH client installed (we suggest TUNNELIER, available from www.bitvise.com).
- TSMSERVER - accepts backups from all the clients. Contains the TSM database
- SERVER1 - an AIX server which has performed backups to TSMSERVER
- SERVER2 - an AIX server which has performed backups to TSMSERVER
- SERVER3 - a Linux server which has performed backups to TSMSERVER
- SERVER4 - a HPUX server which has performed backups to TSMSERVER

So if the PREDCLIENT machine with the client software needs to query backup objects for SERVER1 it issues an SSH command using Tunnelier as follows to SERVER1 (note: "sexec" is the tunnelier commandline SSH client). This would require SSH to be installed and configured on SERVER1. This is highly likely installed on Unix servers anyway - but is a simple task for the user if not.
sexec root@server1 -pw=password -cmd="dsmc q backup /usr/ - subdir=yes -inactive -filesonly"

### this would return output similar to the following:

IBM Tivoli Storage Manager
Command Line Backup/Archive Client Interface
Client Version 5, Release 3, Level 4.12
Client date/time: 10/21/09 15:02:55
(c) Copyright by IBM Corporation and other(s) 1990, 2007. All Rights Reserved.
Node Name: RBTEST
Session established with server SILVTSM_02 AIX-Rs/6000
Server Version 5, Release 5, Level 1.0
Server date/time: 10/21/09 15:02:55 Last access: 10/21/09 14:57:05

| | Accessing as node: SERVER1 | | | | | | | |
|---|---|---|---|---|---|---|---|---|
| | Size | | Backup Date | | Mgmt Class A/I File | | | |
| | 1,642,500 | B | 03/17/08 | 11:21:47 | | DEFAULT | | A |
| /usr/CWSTORES | | | | | | | | |
| | 1,162,232 | B | 03/17/08 | 11:21:47 | | DEFAULT | | A |
| /usr/actloga52.log.Z | | | | | | | | |
| | 8 | B | 03/17/08 | 11:21:47 | DEFAULT | A | /usr/adm | |
| | 171 | B | 03/17/08 | 11:21:47 | | DEFAULT | | A |
| /usr/ch_dump.ksh | | | | | | | | |
| | 15 | B | 03/17/08 | 11:21:47 | DEFAULT | A | /usr/dict | |
| | 17 | B | 05/16/08 | 01:04:03 | DEFAULT | A | /usr/doc | |
| | 12 | B | 03/17/08 | 11:21:47 | DEFAULT | A | /usr/lpd | |
| | 14 | B | 03/17/08 | 11:21:47 | DEFAULT | A | /usr/man | |
| | 821 | B | 03/17/08 | 11:21:47 | | DEFAULT | | A |
| /usr/mksys_backup.ksh | | | | | | | | |
| | 51,200 | B | 03/17/08 | 11:21:47 | | DEFAULT | | A |
| /usr/pagingvg | | | | | | | | |
| | 18 | B | 03/17/08 | 11:21:47 | DEFAULT | A | /usr/pub | |
| | 10 | B | 03/17/08 | 11:21:47 | DEFAULT | A | /usr/spool | |
| | 8 | B | 03/17/08 | 11:21:47 | DEFAULT | A | /usr/tmp | |
| | 214 | B | 03/17/08 | 11:21:47 | | DEFAULT | | A |
| /usr/IMNSearch/httpdli | | | | | | | | |
| | te/dmn.cn | | | | | | | |
| | 339 | B | 03/17/08 | 11:21:47 | | DEFAULT | | A |
| /usr/IMNSearch/httpdli | | | | | | | | |
| | te/dmn.da | | | | | | | |
| | 453 | B | 03/17/08 | 11:21:47 | | DEFAULT | | A |
| /usr/IMNSearch/httpdli | | | | | | | | |
| | te/dmn.de | | | | | | | |
| | 413 | B | 03/17/08 | 11:21:47 | | DEFAULT | | A |
| /usr/IMNSearch/httpdli | | | | | | | | |
| | te/dmn.es | | | | | | | |

To query the objects for SERVER2, SERVER3, SERVER4 we could equally setup SSH and query those servers directly. However, some users might not be keen to open up SSH to multiple servers on their network from PREDCLIENT. So we instead setup SERVER1 as an "SSH agent". On the TSM server we would issue GRANT PROXY commands so that SERVER1 is granted proxy node authority over SERVER2, SERVER3 and SERVER4.

Example:
grant proxynode target=server2 agent=server1
grant proxynode target=server3 agent=server1
grant proxynode target=server4 agent=server1

### From the PDT client run

sexec root@server1 -pw=password -cmd=" dsmc q backup /usr/ - subdir=yes -inactive -filesonly -asnode=server2"

Note the addition of the -asnode parameter. This forces server1 node to query server2 objects.

### This would return output similar to the following:

IBM Tivoli Storage Manager
Command Line Backup/Archive Client Interface
Client Version 5, Release 5, Level 2.0
Client date/time: 16/10/09 15:09:42
(c) Copyright by IBM Corporation and other(s) 1990, 2009. All Rights Reserved.
Node Name: SERVER1
Session established with server SILVTSM_02: Windows
Server Version 5, Release 5, Level 3.0
Server date/time: 23/10/09 12:06:42 Last access: 23/10/09 12:06:19

| | Accessing as node: Rs6000 | | | | | | |
|---|---|---|---|---|---|---|---|
| A/I | File | Size | | Backup Date | | | Mgmt Class |
| | | | | | | | |
| | | 229,230,592 | B | 16/10/09 | 12:28:35 | | DEFAULT |
| A | /ian | | | | | | |
| | 2/DSCLI-5.1.740.196.iso | | | | | | |
| | | 225,095,680 | B | 16/10/09 | 12:29:04 | | DEFAULT |
| A | /ian | | | | | | |
| | 2/DSCLI-5.4.1.44.iso | | | | | | |
| | | 694 | B | 16/10/09 | 12:29:35 | | DEFAULT |
| A | /ian | | | | | | |
| | 2/dsmerror.log | | | | | | |

Just as we queried API objects using {} around the filespace name on windows. We can also use the same {} around the filespace name when querying non-windows objects via an SSH launched dsmc command

### 1.2.3. DIFFERENT METHODS TO COLLECT DATA FOR DATA TYPE AND OS COMBINATIONS

So summarising the above:
The possible combinations are as follows for the client software when querying backup and archive objects.

| Object Type | Data Type | Original Client OSu | Method |
|---|---|---|---|
| Backup | BA client (NON-API) | Windows | dsmc q backup <filespace_name>\ <other TSM options -asnode=<targetnode to_query> -node=predatar_dataaudit |
| Backup | API | Windows | dsmc q backup {<filespace_name>}\ <other TSM options -asnode=<targetnode_to_query> -node=predatar_dataaudit |
| Archive | BA client | Windows | dsmc q archive <filespace_name>\ |
| | (NON-API) | | <other TSM options -asnode=<targetnode_to_query> -node=predatar_dataaudit |
| Archive | API | Windows | dsmc q archive {<filespace_name>}\ <other TSM options -asnode=<targetnode to_query> -node=predatar_dataaudit |
| Backup | BA client (NON-API) | UNIX/Linux/etc | Use tunnelier SSH client sexec <user>@<SSH_agent_hostname> -pw=<password> -cmd="dsmc q backup <filespace_name>/ -asnode=<targetnode to_query> <other TSM options> -node=predatar_dataaudit" |
| Backup | API | UNIX/Linux/etc | Use tunnelier SSH client sexec <user>@<SSH_agent_hostname> -pw=<password> -cmd="dsmc q backup {<filespace_name>}/ -asnode=<targetnode to_query> <other TSM options> -node=predatar_dataaudit" |
| Archive | BA client (NON-API) | UNIX/Linux/etc | Use tunnelier SSH client sexec <user>@<SSH_agent_hostname> -pw=<password> -cmd="dsmc q archive <filespace_name>/ -asnode=<targetnode_to_query> <other TSM options> -node=predatar_dataaudit" |
| Archive | API | UNIX/Linux/etc | Use tunnelier SSH client sexec <user>@<SSH_agent_hostname> -pw=<password> -cmd="dsmc q archive {<filespace_name>}/ -asnode=<targetnode_to_query> <other TSM options> -node=predatar_dataaudit" |

| | | | |
|---|---|---|---|
| (Note : the specific slash character required will be dependant on the operating system concerned, and may be \ or /) | | | |

So depending upon the TYPE of data (API, Non API), the Object type (Backup, Archive) and the Operating system (windows, non-windows) then there are 8 possible combinations.

### 2. ARCHITECTURE

An indication of the components employed in this example of the present invention are shown in figure 2.

The Data Tracker Agent will need the TSM Backup-Archive Client and the TSM server Admin Client to be installed in order to perform the data collection tasks.

A scheduler service will be run from the client, and will have a GUI to set the schedule configuration up and a service to actually run the schedule. In a similar manner to the scheduler provided for the Predatar Virtual Recovery Tracker™ (an existing product of the applicant) we must be able to schedule the queries to run on certain days and during a defined period only.

The Client GUI will need to cater for multiple TSM Servers and multiple nodes. Users must be able to select individual nodes from individual TSM servers, or all nodes from a single TSM server, or all nodes from all TSM servers.

The Client GUI must be capable of storing an SSH command string (against a TSM node) in order to query AIX/Linux/Unix objects.

Since we are using a node called predatar_dataaudit to authenticate with the Predatar server (which has proxy rights over all the other nodes) then we need to initiate a session with the TSM server using this nodename in order to be able to enter the password and store it.
C:\Program Files\Tivoli\TSM\baclient>dsmc q ses - tcpserveraddress=10.20.40.10 -
nodename=predatar_dataaudit
IBM Tivoli Storage Manager
Command Line Backup/Archive Client Interface
Client Version 5, Release 5, Level 2.2
Client date/time: 10/30/2009 16:16:07
(c) Copyright by IBM Corporation and other(s) 1990, 2009. All Rights Reserved.
Node Name: PREDATAR_DATAAUDIT
Please enter your user id <PREDATAR_DATAAUDIT>:
Please enter password for user id "PREDATAR DATAAUDIT": ********
Session established with server SILVTSM01: Windows
Server Version 5, Release 5, Level 3.0
Server date/time: 10/30/2009 16:16:59 Last access: 10/30/2009 16:16:59

| TSM Server Connection Information | |
|---|---|
| | |
| Server Name.............: | SILVTSM01 |
| Server Type.............: | Windows |
| Archive Retain Protect..: | "No" |
| Server Version..........: | Ver. 5, Rel. 5, Lev. 3.0 |
| Last Access Date........: | 10/30/2009 16:16:59 |
| Delete Backup Files.....: | "No" |
| Delete Archive Files....: | "Yes" |
| | |
| Node Name...............: | PREDATAR_DATAAUDIT |
| User Name...............: | |

### 3. EXAMPLE DATA COLLECTION

This section shows how information on TSM backup objects can be collected using the TSM backup-archive client "dsmc q backup" command. The same process applies for archive objects - just replace the word "backup" with "archive" on the dsmc command.

However the following is just an example of data collection. PDT will use one of 8 methods for data collection (as described herein).

### 3.1. TYPICAL ORDER OF TASKS

The order of tasks are described below
- Register proxy node (this is a manual task performed by the person who installs PDT)
- Register a node on the TSM server called "predatar_dataaudit" for each of the TSM servers to be analysed
- Then for each node selected to be in the audit
- Use the "grant proxynode" command to allow the node "predatar_dataaudit" access to the other (target) nodes object information
- Get a list of filespaces, filespace types, data types and occupancies for a target node by querying the OCCUPANCY and FILESPACES table
- As Per section 1.3.3: Run the appropriate "dsmc query backup" or "dsmc query archive" command for a filespace using the proxy node (predatar_dataaudit) and querying the target node
- Note: if it is a non-windows node it will need to run this command via SSH to the identified SSH agent server.
- Manipulate the output file stripping off headers and delimiting correctly
- Process data files to reduce size. We need to keep the size of the data files down to reduce network traffic when they are transferred to the Predatar server.
- Compress, encrypt and send the data files to Predatar server
- Repeat as required for all other target nodes

### 3.2. COMMAND, OPTIONS AND PREREQUISITES

• Register proxy node into the standard domain (or another domain if that does not exist). This is a one off task and is done at time of the PDT installation.

| dsmadmc> | reg | node | predatar_dataaudit |
|---|---|---|---|
| <a_very_long_and_complex_password> domain=standard passexp=0 userid=none | | | |

Then for each node selected to be in the audit
• Grant proxynode rights to "predatar_dataaudit" for a target node:
dsmadmc> grant proxynode target=uatcli01 agent=predatar_dataaudit
• Get list of filespaces,filespace type, object type and occupancy for a particular node
select occ.filespace_name, fil.filespace_type, occ.type, sum(occ.logical_mb) AS MB_STORED from occupancy occ,filespaces fil where occ.stgpool_name in (select stgpool_name from stgpools where pooltype='PRIMARY') AND occ.node_name=fil.node_name and
occ.filespace_name=fil.filespace_name and occ.node_name='UATCLI01' GROUP BY occ.FILESPACE_NAME, fil.FILESPACE_TYPE, occ.TYPE

### For example:

| | |
|---|---|
| FILESPACE_NAME | ASR |
| FILESPACE_TYPE | NTFS |
| TYPE: | Bkup |
| MB_STORED: | 0.46 |
| FILESPACE_NAME: | UATCLI01\SystemState\NULL\System State\SystemState |
| FILESPACE_TYPE: | VSS |
| TYPE: | Bkup |
| MB STORED: | 7163.20 |
| FILESPACE_NAME: | \\uatcli01\c$ |
| FILESPACE_TYPE: | NTFS |
| TYPE: | Bkup |
| MB_STORED: | 3501.06 |
| FILESPACE_NAME: | \\uatcli01\d$ |
| FILESPACE_TYPE: | NTFS |
| TYPE: | Bkup |
| MB_STORED: | 18015.85 |
| FILESPACE_NAME: | \\uatcli01\e$ |
| FILESPACE_TYPE: | NTFS |
| TYPE: | Bkup |
| MB_STORED: | 719.56 |

• Gather the backup information for ALL files (active and inactive) for one of the filespaces using the appropriate method as per the table above. In this instance the filespace type is NTFS (windows), non API, and the object type is "Bkup" so can be queried using the dsmc q backup command on the Predatar client. (If this has been a unix filespace then we would have had to redirect the command via SSH to the SSH agent server)
mkdir c:\temp\data tracker
dsmc q backup \\uatcli01\c$\ -subdir=yes -asnode=UATCLI01
-filesonly -detail -inactive -node=predatar_dataaudit
-dateformat=2 -numberformat=1 -timeformat=1
>c:\temp\data_tracker\data_tracker_UATCLI01.txt

| The various *dsmc q* backup options are thus as follows: | |
|---|---|
| Option | Description |
| -subdir=yes | Ensures that the query will recursively include each sub directory |
| - asnode=<targetnodename> | Perform the query task as though you were this node. Requires grant proxynode command having been run for this node. |
| -filesonly | Will exclude all directory entries from the query, Files will still be listed with their full path however. |
| -detail | Displays the modification and creation time information |
| -inactive | the ***inactive*** option displays both active and inactive objects |
| -node=predatar_dataaudit | Specifies the nodename you are connecting to the TSM server. This nodename needs proxy node authority to query the target nodes data. |
| -dateformat=2 | DD-MM-YYYY |
| -numberformat=1 | 1,000.00 |
| -timeformat=1 | HH:MM:SS |

### 3.3. TYPICAL OUTPUT FROM DSMC Q BACKUP

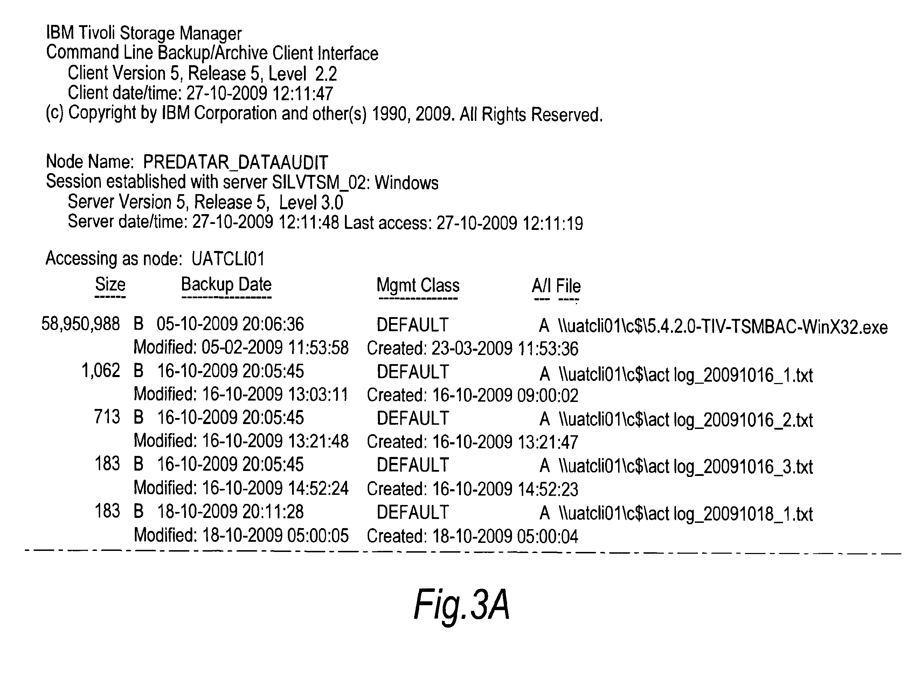

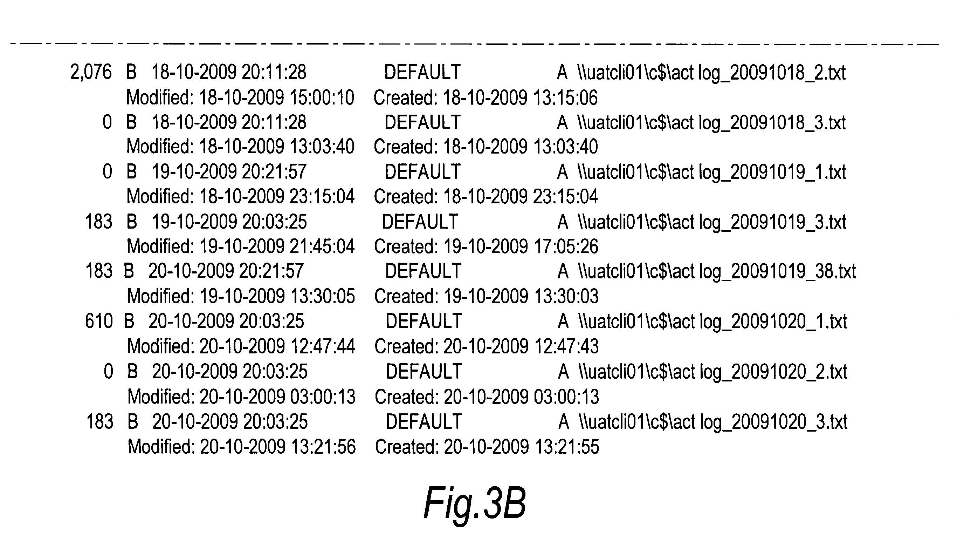

Figure 3 shows a small part of the output from the following command:
dsmc q backup '\\uatcli01\c$\' -subdir=yes -asnode=uatcli01 - tcpserveraddress=silvtsm02 -nodename=predatar_dataaudit -dateformat=2 - timeformat=1 -numberformat=1 -filesonly -inactive -detail > c:\temp\data_tracker_uatcli01.txt

This can then be manipulated into a usable format and (ideally) a reduced size.

### 3.4. WHAT COLUMNS ARE NEEDED?

As you can see above the columns available from "dsmc q backup -detail" is

Size , Backup Date, Mgmt Class, A/I (active/inactive version flag), Filename, Modified Date, Created Date

Note: the q archive command might retrieve different columns

### 3.5. WHAT OPTIONS ARE NEEDED ON THE DSMC COMMAND

| Option | Description |
|---|---|
| -subdir=yes | Ensures that the query will recursively include each sub directory |
| -asnode=<targetnodename> | Perform the query task as though you were this node. Requires grant proxynode command having been run for this node. |
| -filesonly | Will exclude all directory entries from the query, Files will still be listed with their full path however. |
| -detail | Displays the modification and creation time information |
| -inactive | the ***inactive*** option displays both active and inactive objects |
| -node=predatar_dataaudit | Specifies the nodename you are connecting to the TSM server. This nodename needs proxy node authority to query the target nodes data. |
| -dateformat=2 | DD-MM-YYYY |
| -numberformat=1 | 1,000.00 |
| -timeformat=1 | HH:MM:SS |

### 4. CATEGORISING OBJECTS BY FILESPACE TYPE

The following discussion shows sample data that is "conceptual" rather than from an actual example. It is possible that there are minor inconsistencies of an unintentional manner.

We describe above the manner in which TSM commands can be used to collect OCCUPANCY capacity for filespaces. By using these MBs figures we can now sum these up and more quickly produce the charts for "Data Type" (section 4), the "Application and DB Type" (section 5) and the Application and DB Type Breakdown (section 5.1)

Once you go down the "FILE Type" branch (section 6) it needs to be calculated by file extension etc.

### 4.1. CAN'T QUERY CERTAIN FILESPACE TYPES

There are certain filespace names which we cannot query using the DSMC Q BACKUP or Q ARCHIVE commands.
One example is
ASR
Another is
CORESRV01\SystemS tate\NULL\System State\SystemState
Another is
SYSTEM OBJECT

These are very special filespaces. We do not need to know the individual object names contained within these filespaces.

So in the top level graphs we can simply show the OCCUPANCY as collected above.

No drill down is necessary or needed. It can be tried but nothing will be returned from the q backup or q archive command.

### 4.2. DIFFERENT TYPES OF DATA

One of the key features of the reports we need to produce is the ability to report on different types of backup/archive data.

There are four high level data types
- File objects (backed up/archived by the TSM backup-archive client)
- Application and Database backups (backed up by the TSM TDP clients)
- TSM server (it is possible for TSM servers to communicate via a network and store "virtual volumes" in the storage of the other TSM server. These are stored as "archive" objects")
- Third Party (not shown on pie chart)

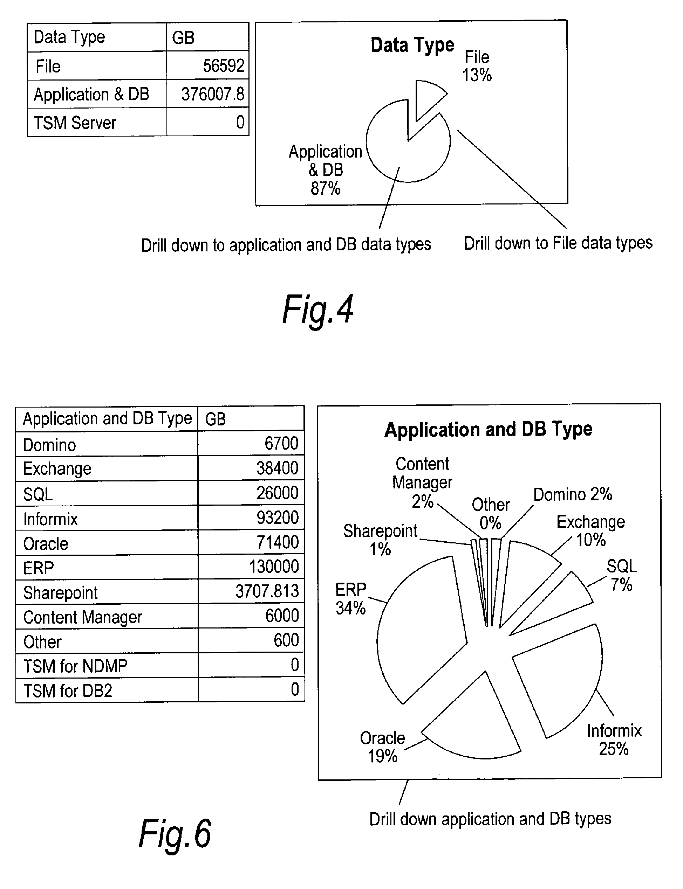

They are to be represented on a top level "Data Type" pie chart, shown in figure 4. This pie chart can be displayed for the Enterprise (all TSM Servers for this customer) or an individual TSM server. This must be selectable from a drop down list before the pie chart is drawn. The default scope should be "Enterprise" with a simple "GO" button to be clicked by the user to draw the pie chart.

This "Data Type" pie chart is one of the entry points in to the other pie charts. We shall call this an "Entry Point" - as in section 7 we will discuss other entry points in to the data.

So what filespace types are included in the 4 main data types?

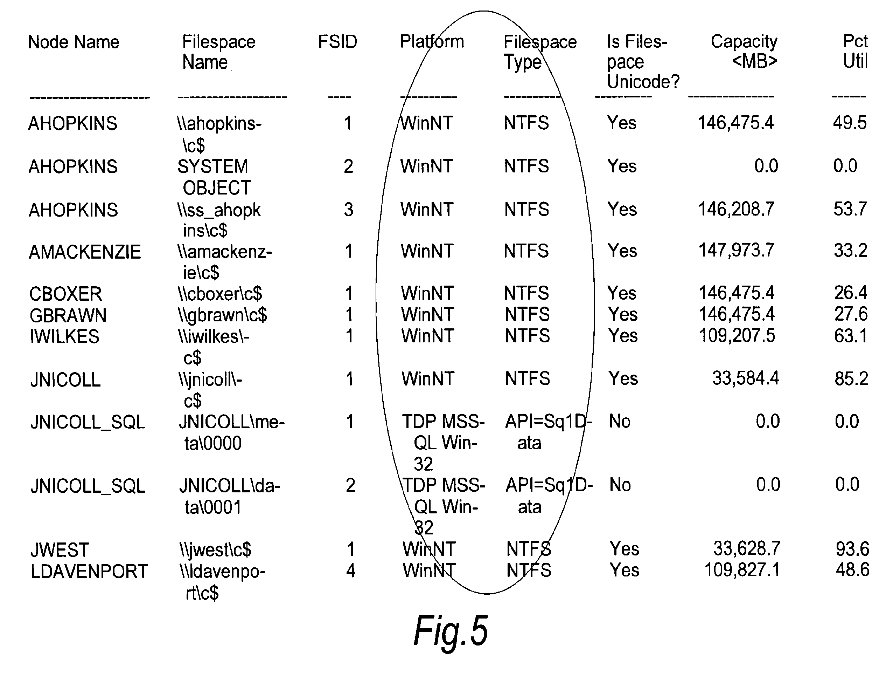

Typing "q files" from a TSM server command line you will get a list of filespaces for each node, shown in figure 5 in which they are listed in the Filespace Type column.

Also the command:
select distinct filespace_type from filespaces
will list all filespace types on a TSM server

| FILESPACE_TYPE |
|---|
| |
| NTFS |
| API:SqlData |
| VSS |
| API:DocAve |
| SYSTEM |
| API:ExcData |
| FAT32 |

We know that NTFS filespace types can only exist because of backup or archive objects sent to the TSM server using the TSM Backup-archive client for Windows. There are lots of different filespace types.

### The current mappings are shown as follows, and can provide data for the tables.

| Product name | Agent Type | Filespace Type | Data Type |
|---|---|---|---|
| Tivoli Storage Manager | TSM Server | ADSM_FS | TSM Server |
| | TSM for NDMP | WAFL (VFS) | Application and DB |
| | | WAFL | Application and DB |
| | TSM for DB2 (via API which is part of BA client) | API: DB2/LINUXZ64 | Application and DB |
| | | | |
| | | | |
| | | API: DB2 | Application and DB |
| | | API: DB2/NT | Application and DB |
| | Backup-Archive Client | VSS | Files |
| | | EXT3 | Files |
| | | NWFS | Files |
| | | VFAT | Files |
| | | TMPFS | Files |
| | | FAT | Files |
| | | NTF | Files |
| | | NTW: LONG | Files |
| | | UNKNOWN | Files |
| | | CDFS | Files |
| | | SYSTEM | Files |
| | | REISERFS | Files |
| | | JFS | Files |
| | | VxFS | Files |
| | | NTFS | Files |
| | | NDS | Files |
| | | JFS2 | Files |
| | | NFS | Files |
| | | EXT2 | Files |
| | | iFS | Files |
| | | UFS | Files |
| | | ZFS | Files |
| | | NovellSMS | Files |
| | | FAT32 | Files |
| | | MMFS | Files |
| | | UDFS | Files |
| | | HFS | Files |
| | | XFS | Files |
| | | NTW: UTF-8 | Files |
| | | NWCompat | Files |
| | | NTWFS | Files |
| Tivoli Storage Manager for Mail | TDP for Domino | API: DominoData | Application and DB |
| | TDP For Exchange | API:NTEXC | Application and DB |
| | | API: ExcData | Application and DB |
| Quest SQL LiteSpeed | Quest SQL LiteSpeed | API:Imceda - SQLLiteSpeed | third party |
| Tivoli Storage Manager for Databases | TDP for MS SQL | API:SqlData | Application and DB |
| | TDP for Informix | API:L | Application and DB |
| | | API: R | Application and DB |
| | TDP for Oracle | API:ORACLE | Application and DB |
| IBM Tivoli Storage Manager for Enterprise Resource Planning | TDP for mySAP | API:XINTV3 | Application and DB |
| Tivoli Storage Manager for Microsoft SharePoint | Tivoli Storage Manager for Microsoft SharePoint | API:DocAve | Application and DB |
| Tivoli Storage Manager HSM for Windows | Tivoli Storage Manager HSM for Windows | API:TSM HSM Client for Windows | Application and DB |
| IBM Content Manager OnDemand | IBM Content Manager OnDemand | API:IBM OnDemand | Application and DB |
| Christie BMR | Christie BMR | API:PC_BAX | third party |
| Tivoli Continuous Data Protection for Files | CDP for Files | API: | Application and DB |

So we can collect object data via the TSM API for a node and filespace, together with the filespace type. This allows us to then link it back to one of the TSM agent types. We can also create "Data Types" (third party, application and DB etc) and link this to the filespace types. This allows the list above to remain flexible, as it is entirely possible that new filespace type or "data type" may arise in future and the flexibility to create and edit mappings accordingly will then be useful.

So the pie chart of figure 4 has been drawn for the four top level data types (as per the filespace type mappings). It is then possible to drill down in to any of the data types. Examples will now be given of drill down in to the following two (only);
- Application and DB Type (Section 5)
- File Type (Section 6)

### 5. APPLICATION AND DB TYPE

From the top level data type (figure 4), we shall assume the user clicked the "Application and DB" data type. The pie chart slices now show one slice for each application and DB type as illustrated in figure 6. These types are defined in our reference tables discussed in section 4.

### 5.1. TABLE VIEW

The "GB" (gigabytes) column is the rolled up number of Gigabytes stored in TSM (from the OCCUPANCY information we collected for the filespace) for this application and DB type.

### 5.2. APPLICATION AND DB TYPE BREAKDOWN

Each of these slices can then drill down again in to the TSM node breakdown for that Application/DB Type. Examples are shown, as follows:

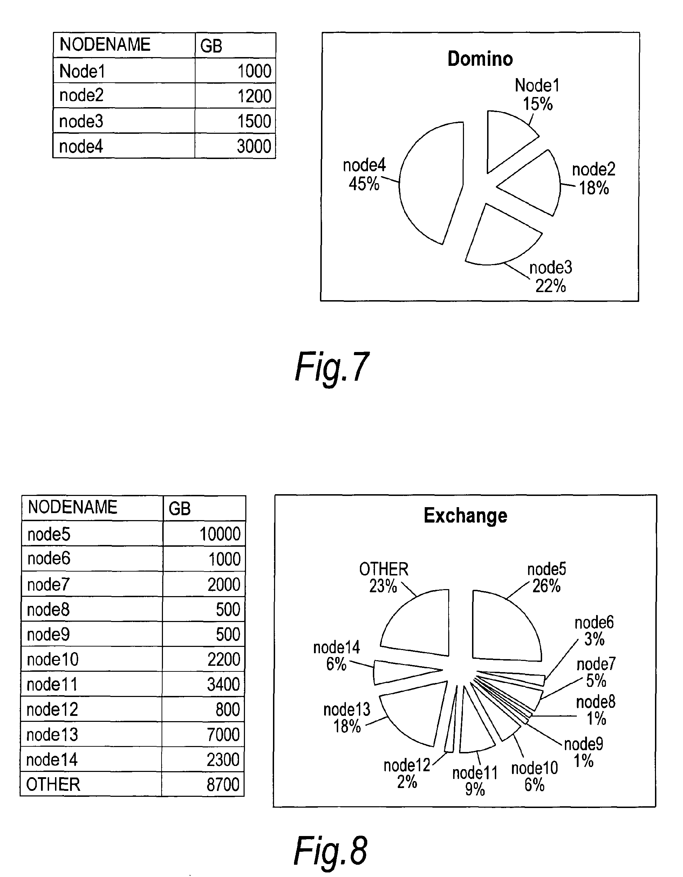

- Figure 7 shows the distribution of Domino™ files
- Figure 8 shows the distribution of Exchange™ files

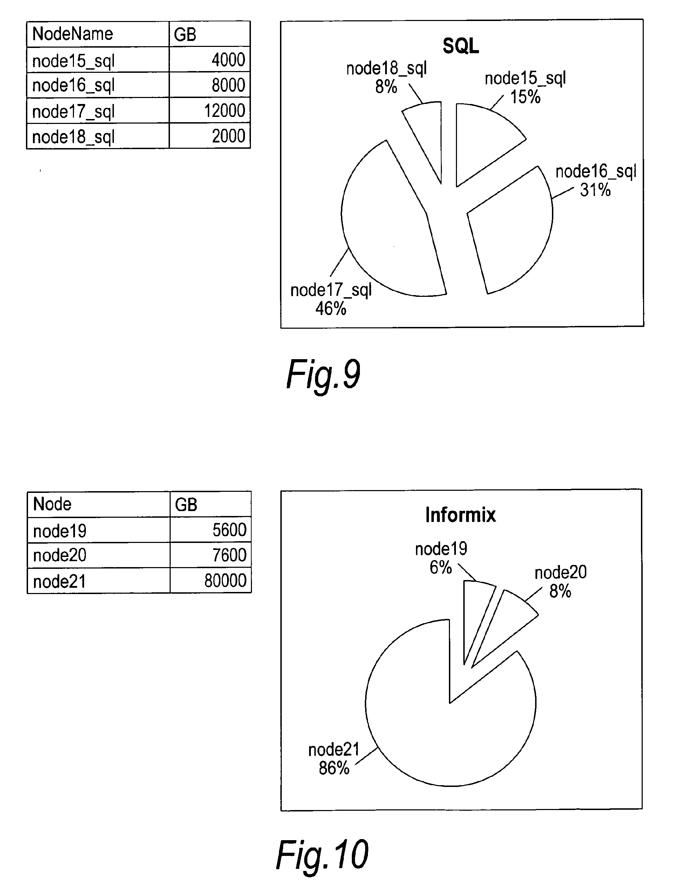

- Figure 9 shows the distribution of SQL files
- Figure 10 shows the distribution of Informix™ files

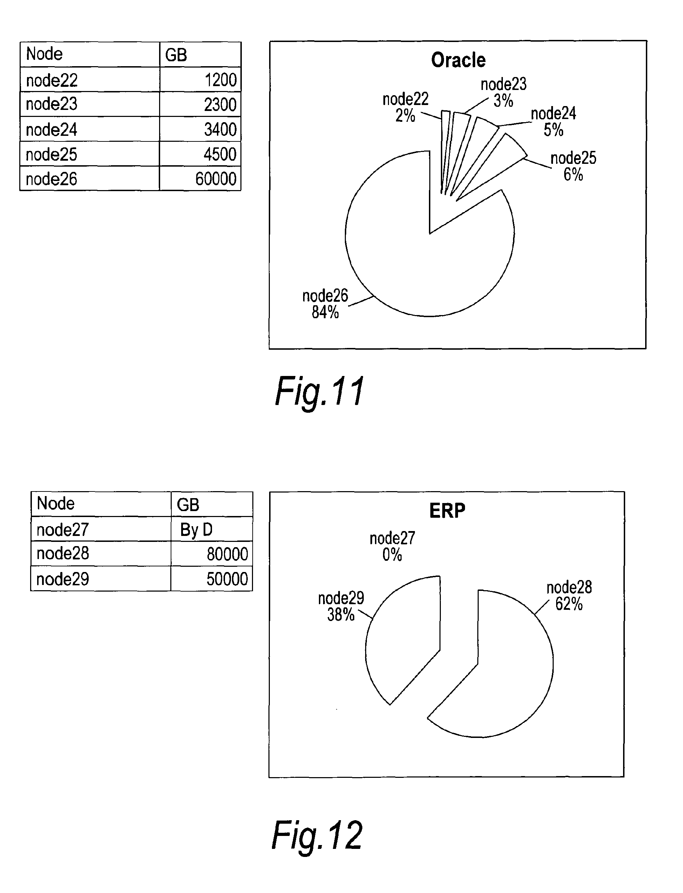

- Figure 11 shows the distribution of Oracle™ files
- Figure 12 shows the distribution of ERP files

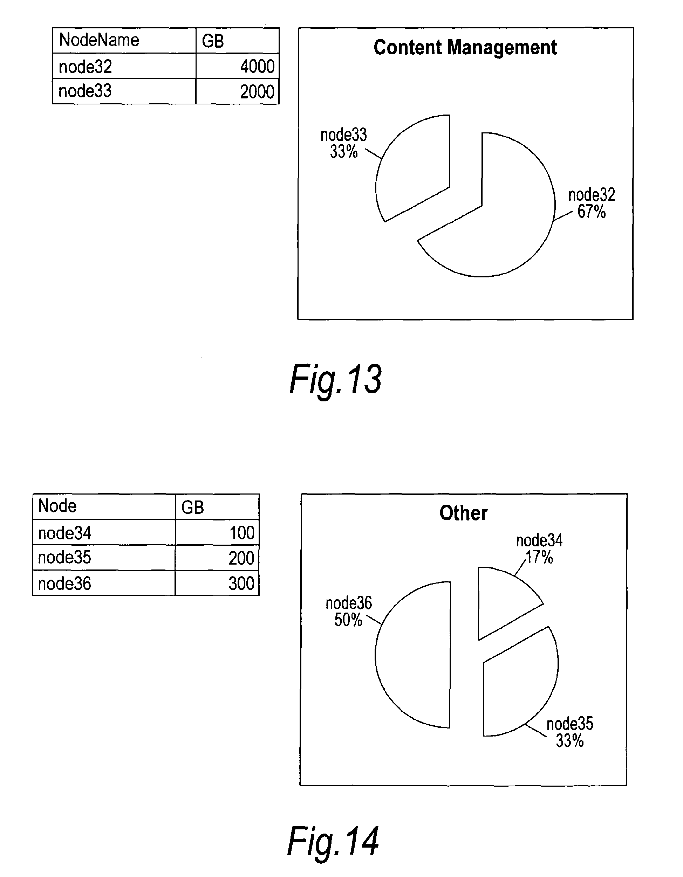

- Figure 13 shows the distribution of Content Management files
- Figure 14 shows the distribution of other file types, and

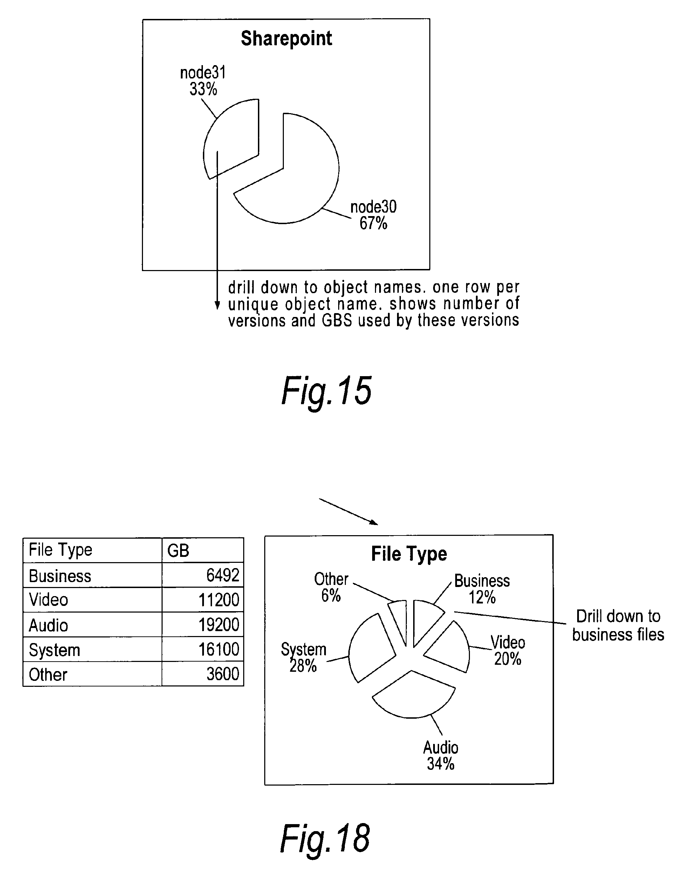

- Figure 15 shows the distribution of Sharepoint™ files.

### 5.3. NODE BREAKDOWN

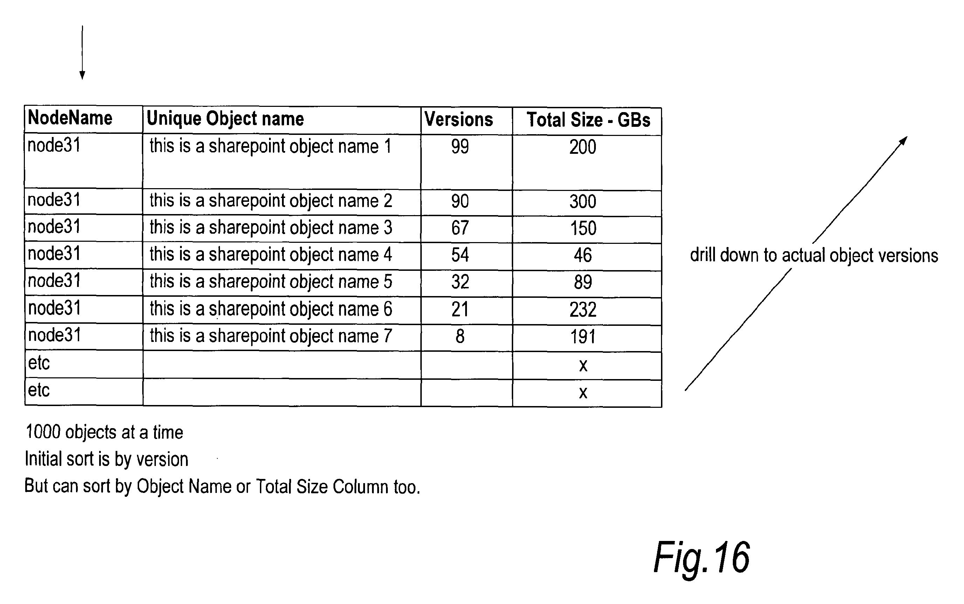

The user might then click on the "node31" slice on figure 15 (Sharepoint™ files) to drill down into the unique object list for a specific TSM node (in this case, the node known as "node31"). Information collected from the Q BACKUP and Q ARCHIVE commands can now be displayed, as shown in figure 16. Lists of the specific object names held for that node are shown, together with the number of different versions and the total size.

### 5.4. OBJECT BREAKDOWN

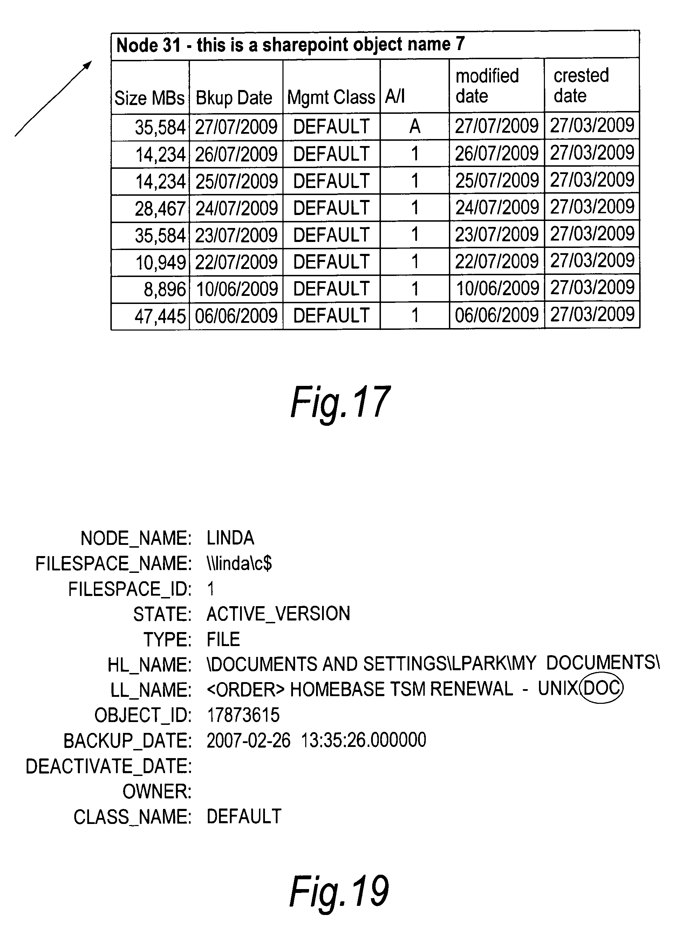

The user can, for the point illustrated in figure 16, drill down further into a unique object name and will be presented with a list of all the actual objects stored in TSM against that object name. This is shown in figure 17.

### 5.5. SUMMARY

So given the filespace types and how they are categorised in Section 4 we managed to drill down from a top level "Data Type" pie chart with 4 categories
- Files
- Application and DB
- Third Party
- TSM Server.

We then drilled down in to the Application and DB type to see pie slices for each of the TSM agents.
- SQL
- Exchange
- Domino
- Sharepoint
- Etc

We then drilled down in to the SharePoint application and DB type to see pie slices for each TSM node that is storing SharePoint objects.
- Node30
- Node31
   We then drilled down in to the Node31 slice to see a list of all the SharePoint objects that node has stored in TSM. This table showed how many version of each distinct object name there were and also how much space those objects consume in TSM. (we are now showing object level data as collected by the Q BACKUP and Q ARCHIVE commands)
- This is a sharepoint object name 1
- This is a sharepoint object name 1
- ...
- This is a sharepoint object name 7
- Etc

And then we expressed an interest in the "this is a sharepoint object name 7" object so we drilled down into this to see the metadata on the 8 actual objects stored in TSM.

So it is possible for a TSM administrator to start at the top pie chart and then drill down and down to find objects which a) might be consuming too much space b) might be holding too many versions c) might not need to be backed up at all.

The GBs calculation for the pie charts are calculated from the OCCUPANCY information when we collected filespace information.

### 6. FILE TYPE

Note: Unlike the "DB/Application type" leg - the information in this "leg" will need to be calculated from "rolled up" object information.

From the top level data type pie chart (figure 4) the user clicked the "File" data type. Filespaces which are of type "Files" make up this type. However the pie chart slices now show one slice for each type of file object (business, audio, video etc), as shown in figure 18. These file types are defined as follows:

### 6.1. CATEGORISING FILE OBJECTS

Many of the objects backed up and archived by the Backup-archive client will have a file extension (e.g..docx, .doc etc).

This is quite clear on files backed up as can be seen in the LL_NAME field in the "BACKUPS" and "ARCHIVES" table (see figure 19). Notice that the full filename is a combination of filespace_name, hl_name, II_name.

Since there may be hundreds or thousands of different file extensions, we do not want to draw pie charts with hundreds of slices (one per extension). The pie chart of figure 18 only has a few slices, one for each type of object. We therefore need to group file extensions - e..g all .doc, .docx, xlsx, .xls extensions are all related to MS office (for example). We could enforce our own rules as to which file extensions are related to which object types. But this will not fit all users. So we need to have a "default" set - and allow each user to edit their own mappings. When a new user goes live, they can inherit the default set.

An example of some mappings are shown below:

| Object Type | Object Category |
|---|---|
| Ink | System |
| exe | System |
| xls | Business |
| DOC | Business |
| url | System |
| docx | Business |
| ppt | Business |
| PDF | Business |
| AVI | Video |
| tmp | Temp |
| db | DBDumps |
| MOV | Video |
| XLW | Business |
| ZIP | Compressed |
| ini | System |
| xlsx | Business |
| RDP | System |
| RAR | System |
| asd | Video |
| MDI | System |
| pptx | Business |
| vsd | Business |
| CSV | Business |
| xml | System |
| bob | Other |
| NONE | Other |
| gif | Pictures |
| mpp | Business |
| txt | Business |
| html | System |
| swf | Video |
| js | System |
| gg | Other |
| tif | Pictures |
| VSS | Business |
| ico | System |
| one | Other |
| Onetoc2 | Other |
| pps | Business |
| mht | Other |

### 6.2. FILE OBJECT TYPES

From the pie chart of figure 18 it is possible to drill down in to the different object types;

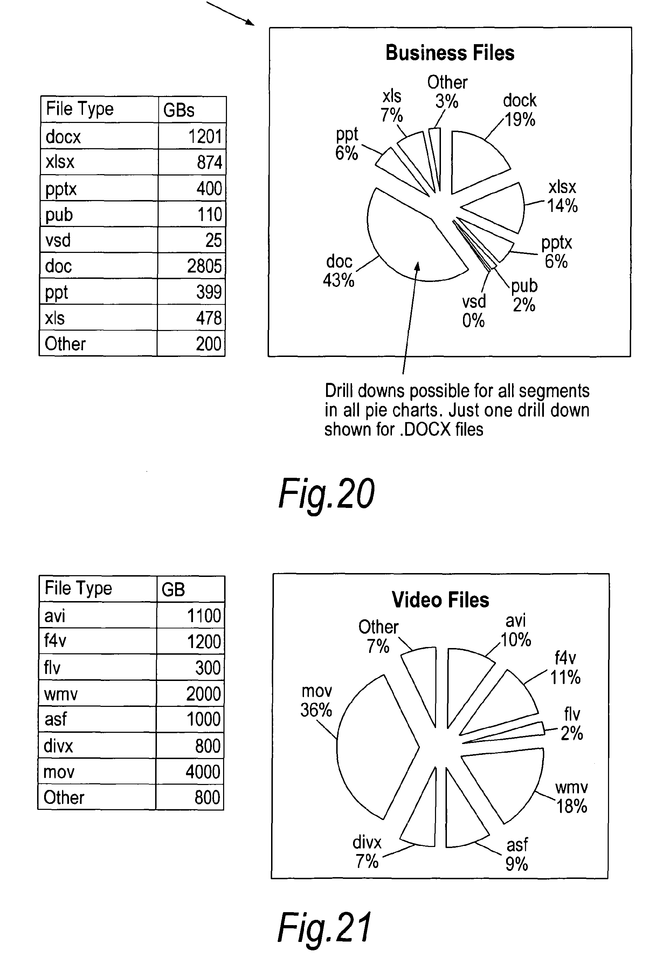

- Figure 20 shows the contribution made by different types of business file
- Figure 21 shows the contribution made by different types of video file

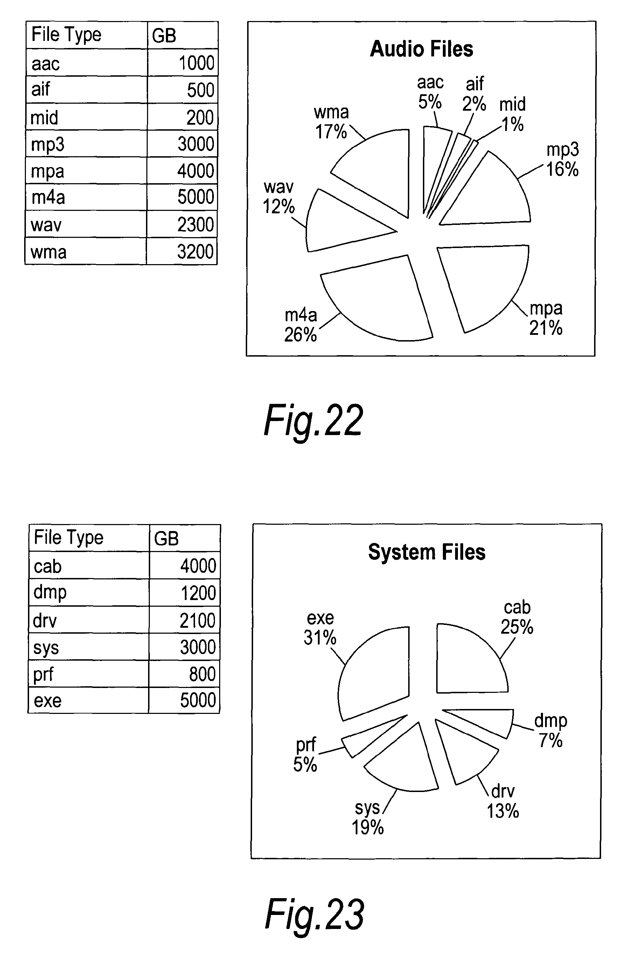

- Figure 22 shows the contribution made by different types of audio file
- Figure 23 shows the contribution made by different types of system file

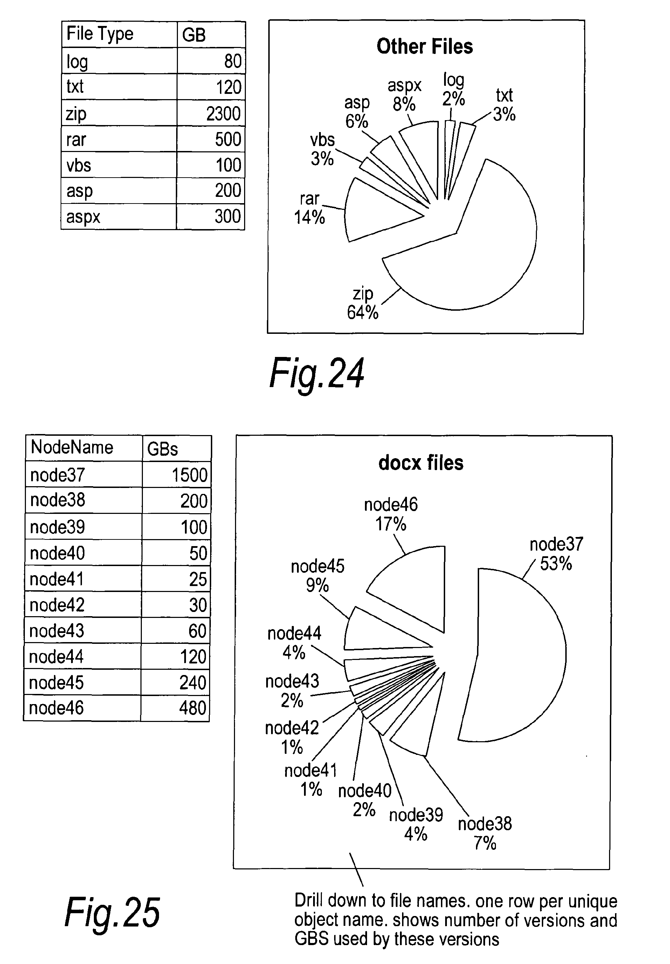

- Figure 24 shows the contribution made by other file types

### 6.3. FILE EXTENSION

We can now drill down in to the "docx" pie slice (for example) and show all TSM nodes which have data stored in TSM which match the .docx file extension. Figure 25 shows the result of this.

### 6.4. OBJECT NAME LIST

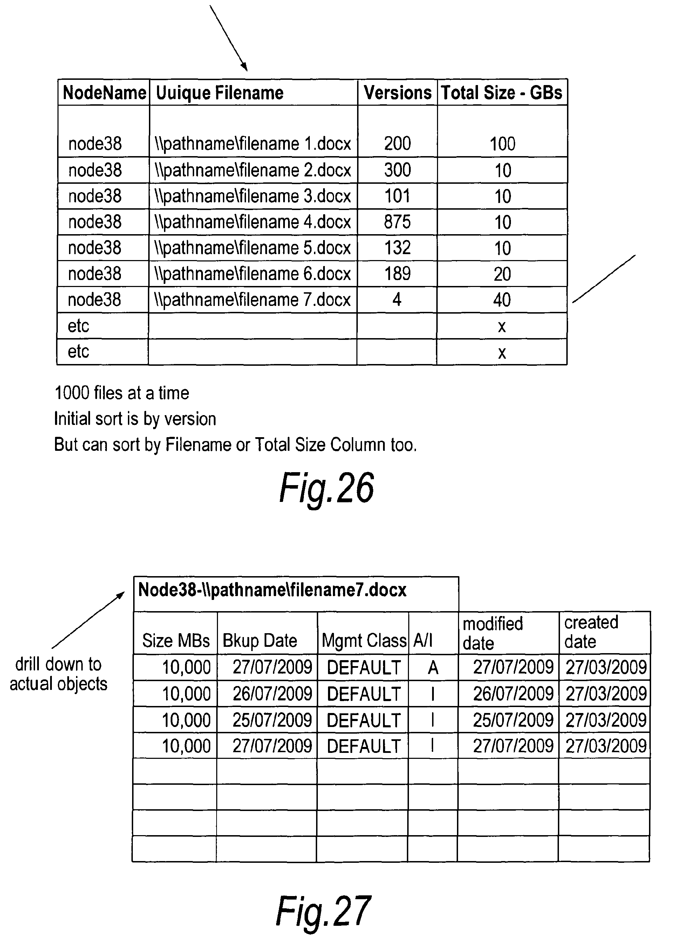

We can now drill down in to a particular node to see which unique object names it has stored in TSM with the .docx file extension - for that node. Figure 26 shows a sample output.

### 6.5. OBJECT LIST

We can now drill down for a particular object name to see the actual objects stored in TSM, figure 27.

### 7. FURTHER REPORT ENTRY POINTS

Other entry points can be provided, as alternatives to figure 4 or in addition. These include the following:

### 7.1. BY 10 BIGGEST NODES

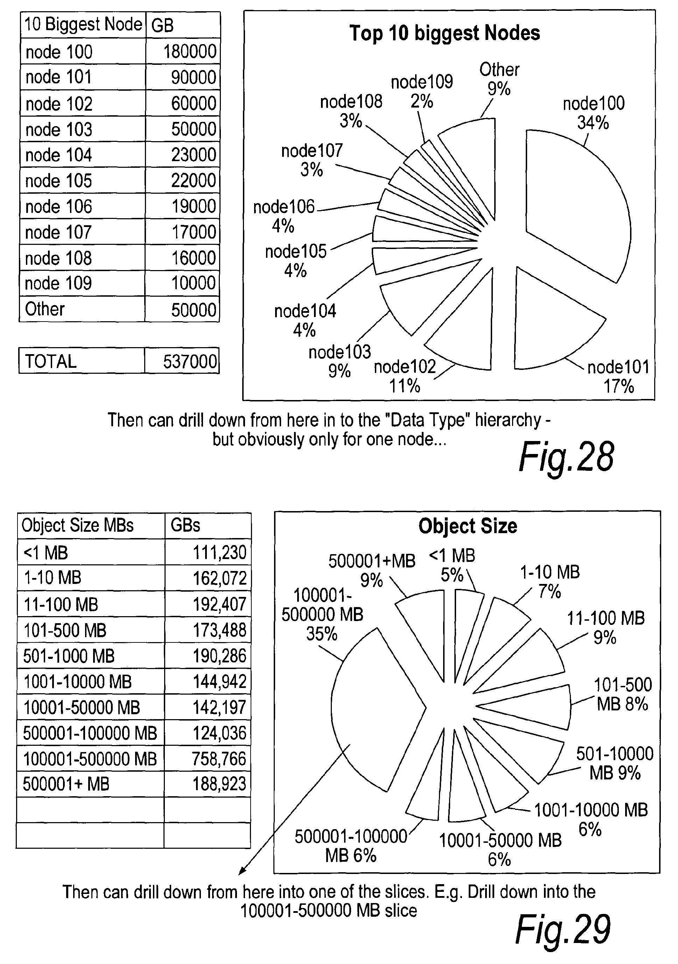

This pie chart (figure 28) can be displayed for the Enterprise (all TSM Servers for this customer) or for an individual TSM server. This would be selectable from a drop down before the pie chart is drawn. The default scope could be "Enterprise", with a simple "GO" button to be clicked by the user to draw the pie chart.

This "10 biggest nodes" pie chart of figure 28 is one of the "entry points" in to the other pie charts. It includes data for all data types.

### 7.1.1. DRILL DOWN INTO TO "DATA TYPE" ENTRY POINT

From the pie chart of figure 28 it is possible to drill down in to the "Data Type" entry point, for that particular TSM node.

### 7.2. BY OBJECT SIZE

This pie chart (figure 29) can be displayed for the Enterprise (all TSM Servers for this customer) or an individual TSM server. This would be selectable from a drop down before the pie chart is drawn. The default scope could be "Enterprise", with a simple "GO" button to be clicked by the user to draw the pie chart.

Since the data collection routines gather information on the size of each and every object we can plot a pie chart which shows the space occupied by all objects that fit into a particular size range For example the size of all objects < 1MB, 1-10MB and so on. "By Object Size" is another "entry point" pie chart. It includes data for all data types.

### 7.2.1. DRILL DOWN TO OBJECT SIZE RANGE

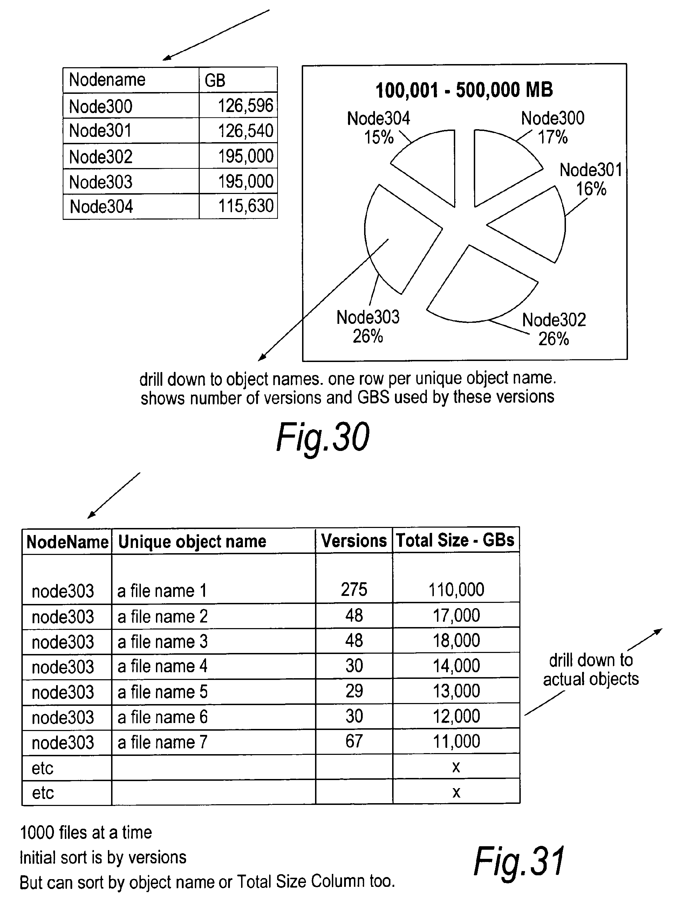

In the example above we can drill down in to the 100,001 - 500,000 MB slice, to see which TSM nodes have objects stored in that size range. Figure 30 shows the result.

### 7.3. DRILL DOWN TO NODE

It is then possible to drill down in to a TSM node (for example, Node303) to display the unique object names, the number of version stored of each and the Total Size in GBs that they occupy in TSM storage. Figure 31 shows the result.

### 7.4. DRILL DOWN TO OBJECT NAME

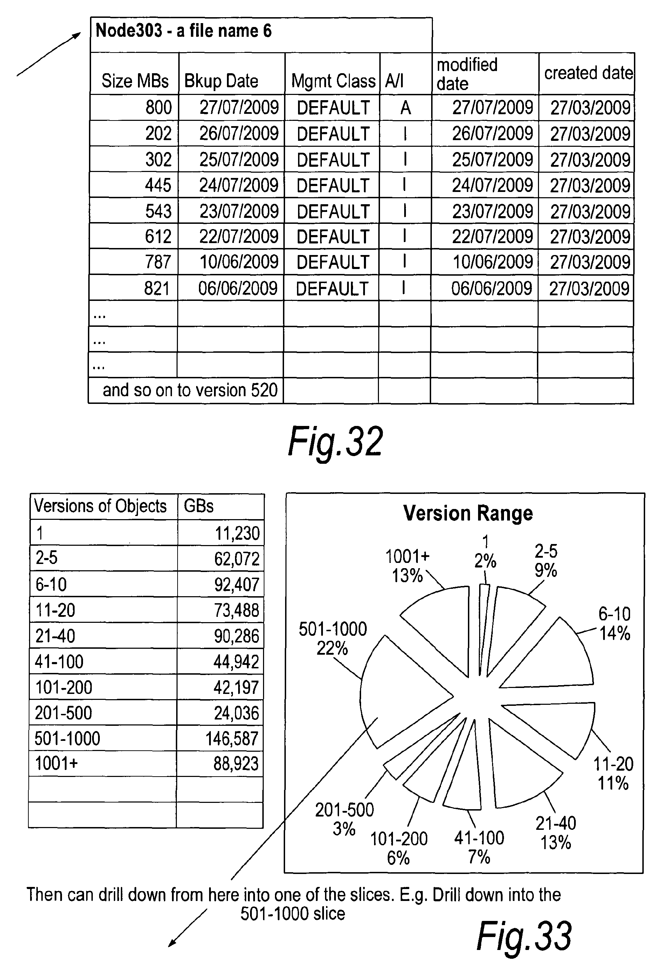

The user can then drill down to an actual objectname; as shown in figure 32.

### 7.5. BY NUMBER OF VERSIONS

Figure 33 shows an alternative entry point. This pie chart can be displayed for the Enterprise (all TSM Servers for this customer) or an individual TSM server. This can be selectable from a drop down before the pie chart is drawn. The default scope could be "Enterprise", with a simple "GO" button to be clicked by the user to draw the pie chart.

Since the data collection routines gather information on the number of versions of each and every object, we can plot a pie chart which shows the space occupied by objects which have the number of versions within a particular range. For example 1 version, 2-5 versions, 6 versions etc

"By Number of Versions" is therefore another "entry point" pie chart. It includes data for all data types.

### 7.5.1. DRILL DOWN TO VERSION RANGE

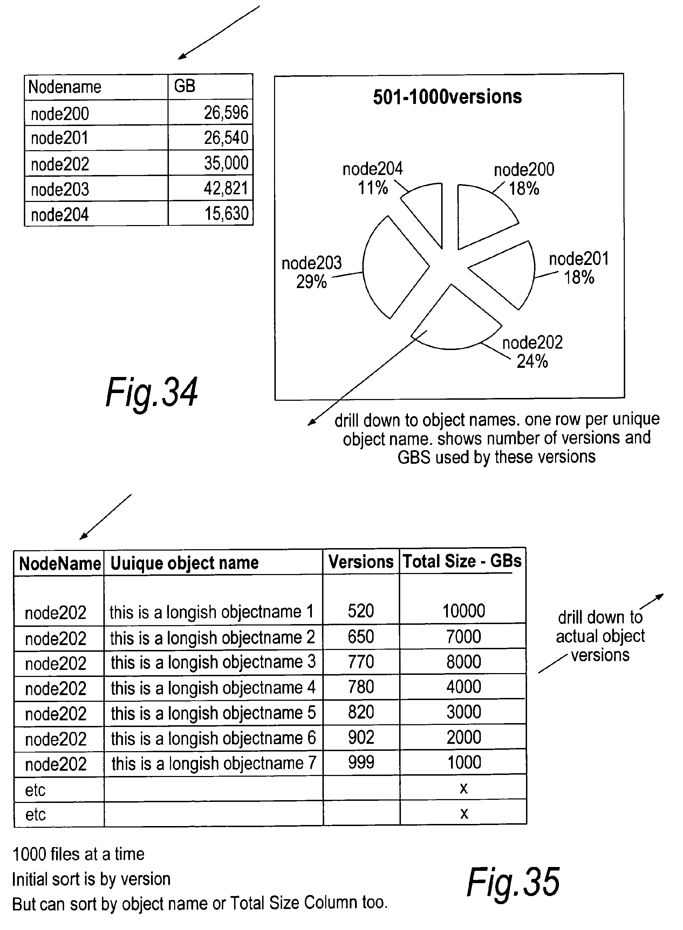

The user can drill down to any version range pie slice. For example, the result for 501-1000 versions is shown in figure 34.

### 7.5.2. DRILL DOWN TO NODE

The user can then drill down in to a particular node to see the unique object names which have 501-1000 versions. Figure 35 shows the result.

### 7.5.3. DRILL DOWN TO OBJECT VIEW

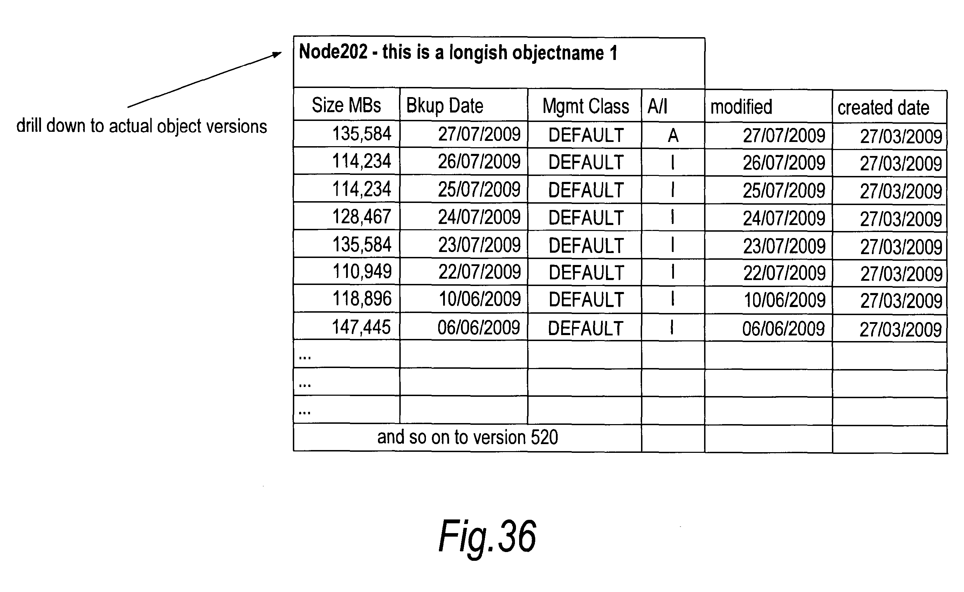

The user can then drill down to a particular object name to see the actual object versions stored in TSM. Figure 36 shows the result.

### 7.6. OTHER ENTRY POINTS. THESE COULD INCLUDE:

- "By Backup/Archive Date", or
- "By Modified Date", or
- "By Created Date", or others as derived.

Thus, the present invention provides a means for obtaining the data necessary to interrogate a TSM or similarly-structured system, and presents this in a comprehensible manner. With this, users can optimise the storage policies of TSM and avoid waste (or use existing resources more effectively).

It will of course be understood that many variations may be made to the above-described embodiment without departing from the scope of the present invention.

## Claims

1. Apparatus for managing the use of storage devices on a network of computing devices,
the network comprising a plurality of computing devices each running different operating systems, at least one data storage device, and a management system for controlling archival of data from the computing devices to the data storage device, the management system including a database of data previously archived;
the apparatus comprising an agent running on a first computing device attached to the network, the first computing device running a first operating system, the agent being adapted to issue an instruction to a second computing device being one of the plurality of computing devices via a remote administration protocol, the second computing device running a second operating system that differs from the first operating system, and the instruction comprising a query to the database concerning data archived from computing devices running the second operating system.

2. Apparatus according to any one of the preceding claims in which the request concerns data archived from a computing device other than the second computing device, being a computing device running the second operating system.

3. Apparatus according to claim 1 or claim 2 in which the agent is adapted to issue multiple such requests to multiple computing devices on the network.

4. Apparatus according to claim 3 in which each request issued by the agent is to a computing device running a different operating system.

5. Apparatus according to any one of the preceding claims in which the computing devices are servers.

6. Apparatus according to any one of the preceding claims in which the first computing device is one of the plurality of computing devices.

7. Apparatus according to any one of the preceding claims in which the remote administration protocol is Secure Shell (SSH).

8. Apparatus according to any one of the preceding claims in which the archived data includes backups of the computing devices.

9. Apparatus according to any one of the preceding claims in which the first operating system is Microsoft^{®} Windows™.

10. Apparatus according to any one of the preceding claims in which the management system is Tivoli Storage Manager™.

11. Apparatus according to any one of the preceding claims in which agent is further adapted to issue a query to the database concerning data archived from computing devices running the first operating system.

12. A method of gathering information as to the usage of storage devices on a network of computing devices,
the network comprising a plurality of computing devices each running different operating systems, at least one data storage device, and a management system for controlling archival of data from the computing devices to the data storage device, the management system including a database of data previously archived;
the method comprising the steps of;
i. providing an agent on a first computing device running a first operating system and attached to the network,
ii. via the agent, issuing an instruction to a second computing device being one of the plurality of computing devices via a remote administration protocol, the second computing device being one running a second operating system that differs from the first operating system, and the instruction comprising a query to the database concerning data archived from computing devices running the second operating system.

13. A software agent for assisting in the management of storage devices on a network of computing devices,
the network comprising a plurality of computing devices each running different operating systems, at least one data storage device, and a management system for controlling archival of data from the computing devices to the data storage device, the management system including a database of data previously archived;
the software agent being adapted;
i. to run on a first computing device having a first operating system and being attached to the network,
ii. to issue an instruction to a second computing device being one of the plurality of computing devices via a remote administration protocol, the second computing device running a second operating system that differs from the first operating system, the instruction comprising a query to the database concerning data archived from computing devices running the second operating system.

14. A data storage resource management system comprising a query agent and an analysis agent,
the query agent being adapted to issue at least one query to a database of backed up or archived objects in order to elicit information relating to the objects;
the analysis agent being adapted to organise the query results and display totals of objects meeting defined criteria

15. A data storage resource management system according to claim 14 in which the query agent is adapted to run on a first computing device running a first operating system, and to issue an instruction to a second computing device via a remote administration protocol, the second computing device running a second operating system that differs from the first operating system, and the instruction comprising a query to the database concerning data archived from computing devices running the second operating system.
